# EUROPEAN PATENT APPLICATION

(11) **EP 1 855 496 A1**
(43) Date of publication of application: **14.11.2007**
(21) Application number: 06300454.3
(22) Date of filing: 11.05.2006
(51) Int. Cl.: H04Q 7/38

(54) **A method and apparatus for switching the mode of radio equipment in certain environment**

(71) Applicant: International Business Machines Corporation, Armonk, NY 10504 (US)
(72) Inventor: Rey-Robert, Xavier, La Gaude 06610 (FR)
(74) Representative: Imbert de Tremiolles, Ghislain

(57) **Abstract**

A method of causing a device in a first mode located in a particular vicinity to operate in a predetermined second mode, comprising broadcasting a request to any devices located the particular vicinity, which request may adjust the settings of the device, such that if the device operates in the vicinity it will operate in the predetermined second mode.

## Description

### Field of the invention

This invention relates to a method and apparatus for switching the mode of radio equipment in certain environments, in particularly but not exclusively for switching the mode of mobile phones in environments where their ringing could cause problems.

### Background of the invention

Mobile phones users are everywhere, in the cinema, in hospitals, on an airplane, at meetings etc. A telephone in such environments may interrupt the enjoyment of the film, disturbing the equipment or generally causing a nuisance to people as the case may be. In particular, in hospitals and on airplanes use and activation of a mobile telephone can cause problems to the equipment in those areas and may be dangerous. It is very easy for people to forget to switch off their telephone in these environments or others. This can create a nuisance for people in the vicinity and can cause embarrassment for the owner of the telephone.

Certain cinemas and hospitals and other environments have attempted to solve the problem by installing radio jammers to disrupt telephone reception and therefore prevent the telephone from ringing. The problem with such devices is that they are illegal in some countries and can disturb sensitive equipments in environments such as hospitals or airplanes.

Accordingly, there exists a need for a way to ensure that when mobile telephone users forget to switch off their telephone in environments where use of the telephone would be a nuisance or a danger, that something is done.

One object of the present invention is to provide a method or system for requesting the mobile telephone to stop ringing or even switching off the telephone in certain environments.

Another object of the present invention is to overcome at least some of the problems related to the prior art in this field.

### Summary of the invention

The present invention is directed to the method and system as defined in the independent claims.

More particularly the present invention discloses a method of causing a device in a first mode located in a particular vicinity to operate in a predetermined second mode, comprising broadcasting a request to any devices located the particular vicinity, which request may adjust the settings of the device, such that if the device operates in the vicinity it will operate in the predetermined second mode.

Further embodiments of the invention are provided in the appended dependent claims.

This invention has the advantage that radio devices that are willing to comply with a mode change or silence request may be made silent or switched off without any action being necessary by the user. This will reduce the number of frustrating interruptions to a film, meeting or whatever.

In addition, the users can set up their own telephone to always comply with requests to silence/switch off or further define the conditions their telephone will comply to.

### Brief description of the drawings

Figure 1 is a simple diagram for showing details of how the system works in one embodiment of the present invention.
Figure 2 is a simple diagram for showing details of how the system works in a second embodiment of the present invention.
Figure 3 is a flowchart of how the method steps of the present invention is carried out at the requester end.
Figure 4 is a flowchart of how the method steps of the present invention is carried out at the receiver end.

### Detailed description of the present invention

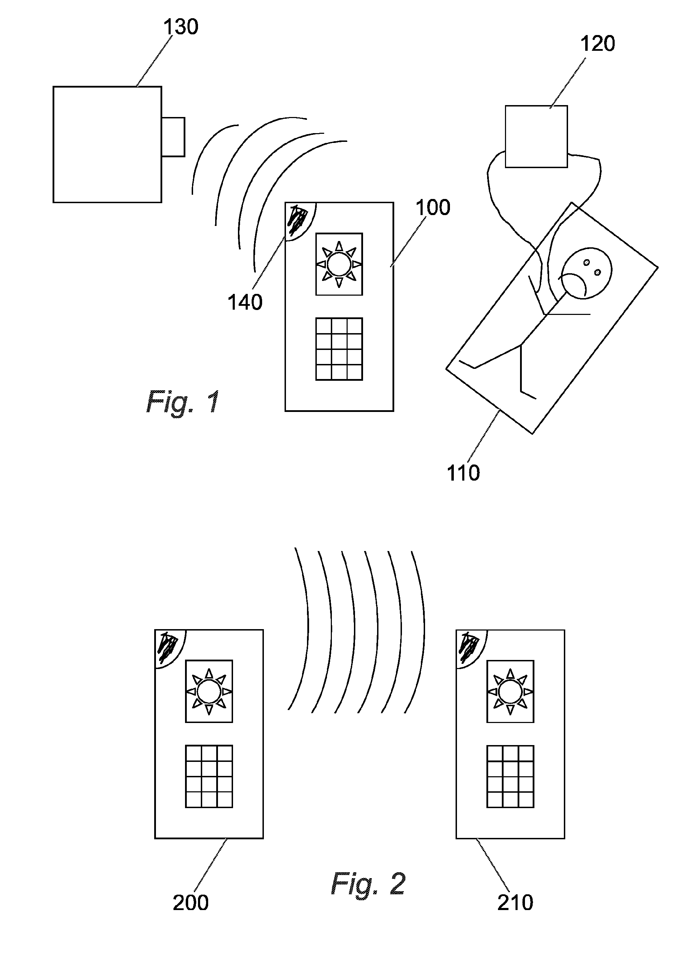

Referring to figure 1, a mobile telephone 100 is found located in a hospital room where a patient 110 is found on a bed. The patent is attached to sensitive radio based equipment from monitoring a vital organ in his body with the device 120. Also located in the hospital, is a device 130, in accordance with the present invention, which is for the purpose of this description, be know as a requester, or requesting apparatus. By the same token, the mobile telephone may be known as a receiver or a peer requester. Details of these terms will become clear later in the description.

A requester can be of two types as previously indicated. The requester can be a peer requester or a requesting apparatus. The peer requesters are end user devices that are able to comply to "silence requests" or mode change requests and are also able to send "silence requests" or mode change requests. Requesting apparatus are merely designed for the purpose of sending "silence requests". A silence request is a demand to switch the device to a silent operating mode. A silent operating mode is one which switches the device into a mode where will not admit any noise for example rings, sounds, music, etc.

It is possible in certain circumstances that the mode change effected by the requester (apparatus or peer) may be something different than a request for silent operation. Instead the mode change of the device could be to turn off the device or set it to emergency reception and calling only or any other appropriate mode. It will be appreciated that this appropriate mode is any mode which is different in someway from the starting mode of the device.

Returning now to figure 1, the requester will broadcast the silence request to all receivers in the vicinity. In this case, requester 130 will broadcast a mode change request (for silence or possibly to switch off) to all receivers, including 100, in its vicinity. The range over which the request is transmitted (the radio signal range) can be limited by the radio technology used. Examples of radio technology include Bluetooth, Wi-Fi, etc. shown generally at 140. In addition, shielding or nature of the signal can include some details which describe and determine the range of coverage of a specific requester. There is generally no need for any determination of distance between the different elements within the system, it is merely the range of transmission of the requester that is specified. Although in other environments other information may be used, such as frequency, power levels etc.

In certain environment, the requester will be automatic, in that is set up to broadcast permanently, during specific hours or even during specific events the required mode change request. These types of apparatus would typically be expected to be found in cinemas, hospitals, restaurants, airplane gates etc.. In the example of a hospital the mode change request may be permanently set, so that during all time a mobile telephone is in the hospital it will be requested to stay silent and not ring. Similarly, any other devices (e.g. lap tops, PDAs etc.) will ask to operate in a silent mode. In addition, the hospital may transmit a signal which enables the device to in fact be switched off rather than operate merely in a silent mode in areas of the hospital where mobile telephones, computers and other devices may interfere dangerously with the equipment.

At an airplane gate the mode request may be a switch off command or request which is set permanently set.

In the example of cinemas and restaurants, the transmission of a silent request may only occur during screenings or during specific meal times.

In the environment of a meeting, devices such as mobile telephones and laptops can also act as a requester for any other mobile telephone or laptop in the vicinity. In this case, the mobile telephone or laptop acts like a requester but it acts in a peer to peer mode as opposed to the case of the requesting apparatus of the previous example.

Accordingly, referring to figure 2 the peer requester 200 may broadcast a silence request during a specific event, for example a meeting or a conference or a presentation using a transmitter, eg blue tooth, infra red etc. 140. On receipt of the silence request, all other mobile phones or laptops 210 may change themselves to silent operation if they are set up so to do.

All receivers will receive all silence requests that are broadcast either from a peer type requester or an apparatus type requester. The user of the receiver (mobile phones, laptops or whatever as previously described) can set up the device to comply or not with the silence requests. In addition, the user set up may include the ability of the receiver to distinguish between requests from different kind of requesters (ex: peer requesters or apparatus requesters or from different environments (hospital/cinema etc...) or the ability to determine the level of the requester. That is to say that the transmissions made by peer requesters or apparatus requesters have different levels. The levels may be set up in the original setting up process for the requester and be an indicator of how important it is for the device to comply therewith. For example, a requester in a hospital may be at a higher level than a requester in a cinema or restaurant.

The user may decide to set their receiving device to comply with all requesters making a mode change request above a certain level at all times. For lower level requests for mode change the user may decide to set their device to comply only at certain times or for certain telephone numbers. For example the compliance level may be set such that for mode change request from peer requesters may only occur outside office hours. The mode change requests could also be associated with a requirement for allowing certain telephone calls to be received and certain telephone calls not to be received irrespective of the compliance levels and the requester levels. For example, a telephone number of incoming calls may be excluded from compliance at specific compliance levels. For example a call from a certain number can be received at level request but not at a second level request.

The requesters may be set to operate at more than two levels. The telephone or the laptop that is the receiver may set the requester level to be implemented automatically at said levels 1 and 2 for the requester, but be selective for said levels 3 and 4, for example. This may be preset in the telephone in an appropriate menu for doing so.

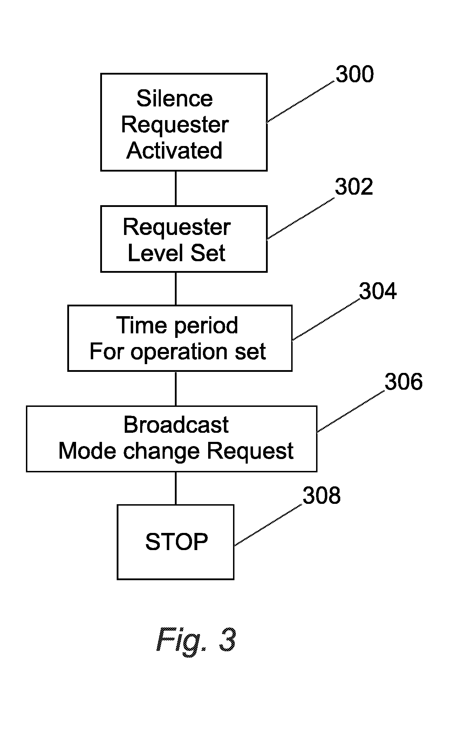

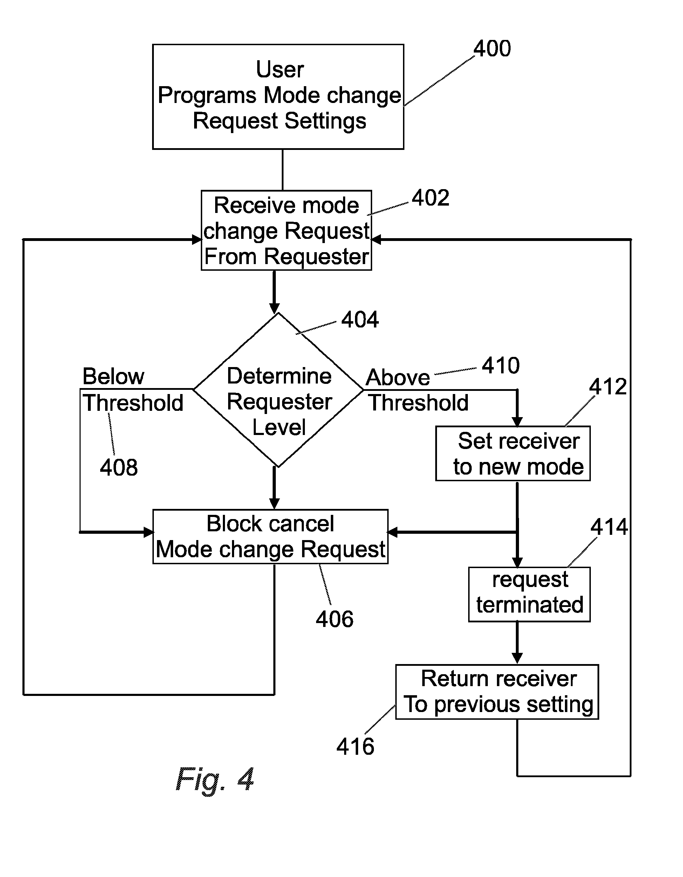

The following two flow diagrams in figure 3 and 4 show the details of how the requester sends out a mode change request and how the receiver receives and processes such a request. Any broadcast from the requester may be picked up by the receiver using wireless means such as Bluetooth or any other appropriate medium. Alternatively, infrared or other electromagnetic frequencies may be used to communicate the broadcast mode change or silence request to the receiver.

Referring now to Figure 3 the silence requester is activated (step 300). The requested level is then set (step 302). At the same time, the frequency of the requester may be activated and set as may be any other features of the requester that are necessary to be set, for example the mode change that is required from the device. The required time period for which the requester is to operate is then determined and set (step 304). The time period will be permanent for those devices at a certain requester level which we required to operate all the time, for example in a hospital, on an airplane or anywhere else where the devices may cause danger. The requester then broadcasts the request has as set up in steps 302 and 304, step 306. The request continues until such time is the time period for operation is finished at which time the requester stops (step 308).

Turning now to the receiver end now illustrated in Figure 4. The user of the receiver programs the request settings within the device, step 400. At any time in the future, the receiver may receive a silence or mode change request, from a requester, step 402. The receiver must then determine what level the requester level is set at, step 404. In certain circumstances, the user may have the ability to immediately block or cancel any request, step 406. In this case, the process loops back to the position where it might again receive a silence or mode change request from the requester and the process starts again.

If the requester level of the requester is below a certain threshold as determined by the receiver at step 404, step 408, the receiver will block or cancel any silence request and return the device to be ready for the next request that might come along in the same way as previously indicated.

However, if the request level from the request device is above the threshold set by the receive device 410, the receive device will set the receiver to a silent or other new mode 412.

At some stage during the time that the receiver is set at a silent mode, the user may chose to block or cancel the silence request as previously indicated at step 406. Again, if this is the case, the device resorts to awaiting the next request for silence request. If the user does not block or cancel the request, the request will continue until terminated step 414. This termination may be bought about by the requesting apparatus stopping or by the user leaving the vicinity of the requester.

As soon as the silence or mode change request is terminated, the device returns to its previous setting or original mode of operation, unless the device has been switched off, in which case the user must reactive the device, step 416.

The mobile phone or laptop refered to herein may be referred to as a mobile communications device. This definition is not limited to just these mobile communications devices but may include others as will be clear to person skilled in the art.

In order to implement an example of the method, the telephone may include an additionnal (eg silent request) menu in the standard menu list of the telephone. The user can select this menu and make the required changes to the setting of the phone. At the other end of the system, the requester may be included in a base station or equivalent for sending the silence request. The setup of the requester to be able to send requests and at which level the request should be made may be made by programming a transmitter associated with the base station or equivalent means. The request may be modulated or otherwise processed to be carried on any type of transmission generated by the transmitter. If the transmitter forms part of a base station, there only needs to be modification to the base station in terms of enabling the silence or other mode change request to be transmitted via the transmitter either alone or integrated with other transmissions. If the transmitter is not associated with a base station, the transmitter will operate in any necessary manner to transmit the request signal.

While the invention has been particularly shown and described with reference to a preferred embodiment, it will be understood that various changes in form and detail may be made therein without departing from the spirit, and scope of the invention.

## Claims

1. A method of causing a mobile communications device in a first mode located in a particular vicinity to operate in a predetermined second mode, comprising broadcasting a request to any mobile communications devices located the particular vicinity, which request may adjust the settings of the mobile communications device, such that if the device operates in the vicinity it will operate in the predetermined second mode.

2. The method of claim 1, further comprising setting the broadcast request to one of a plurality of levels depending on the nature of the vicinity, such that for each level a different proportion of mobile communications devices are made to operate in the predetermined mode.

3. The method of claim 1 or claim 2, further comprising setting the broadcast request to last for a specific duration.

4. The method of any one of claims 1 to 3, further comprising setting the broadcast request to extend over a specific area.

5. The method of any preceding claim, further comprising stopping the broadcast of the request to allow the device to return to the first mode.

6. The method of any preceding claim, further comprising selecting the request so as to enable the second mode to be selected from the group including: a silent mode, a switched off mode, an emergency call mode, a selected number mode, a compliance mode.

7. A method of operating a mobile communcations device in the vicinity of a broadcasting apparatus, which broadcasting apparatus generates a request in the vicinity which may change in the operating mode of the mobile communications device from a first mode to a predetermined second mode, the method comprising:
- setting a request threshold for the mobile communications device;
- receiving the request from the apparatus;
- if the request is above the threshold changing the operating mode from the first mode to the predetermined second mode.

8. The method of claim 7, further comprising, leaving the mobile communications device in the first mode if the request is below the threshold.

9. The method of claim 7, further comprising allowing the mobile communications device to return to the first mode if the device leaves the vicinity.

10. The method of claim 7, further comprising allowing the mobile communications device to return to the first mode if the request is terminated.

11. A system comprising means adapted for carrying out the steps of the method according to any one of claims 1 to 6.

12. A mobile communications device comprising means adapted for carrying out the steps of the method according to any one claims 7 to 10.

13. A mobile communications device comprising means adapted for carrying out the steps of the method according to any one claims 1 to 10.

14. A computer program comprising instructions for carrying out the steps of the method according to any one of claims 1 to 6, when said computer program is executed on a computer system.

15. A computer program comprising instructions for carrying out the steps of the method according to any one of claims 7 to 10, when said computer program is executed on a computer system.
